(19)

Europäisches
Patentamt
European
Patent Office
Office européen
des brevets

(11)　EP 2 927 787 B1

(12)　**EUROPEAN PATENT SPECIFICATION**

(45) Date of publication and mention
　　 of the grant of the patent:
　　 **03.05.2017　Bulletin 2017/18**

(51) Int Cl.:
　　 *G06F 3/0481* (2013.01)　　*G06F 3/0346* (2013.01)
　　 *G06F 3/01* (2006.01)　　　*G06F 3/0485* (2013.01)

(21) Application number: **15157885.3**

(22) Date of filing: **05.03.2015**

(54) **METHOD AND DEVICE FOR DISPLAYING PICTURE**

VERFAHREN UND VORRICHTUNG ZUR ANZEIGE VON BILDERN

PROCÉDÉ ET DISPOSITIF D'AFFICHAGE D'IMAGE

(84) Designated Contracting States:
　　 **AL AT BE BG CH CY CZ DE DK EE ES FI FR GB
　　 GR HR HU IE IS IT LI LT LU LV MC MK MT NL NO
　　 PL PT RO RS SE SI SK SM TR**

(30) Priority: **31.03.2014　CN 201410125658**

(43) Date of publication of application:
　　 **07.10.2015　Bulletin 2015/41**

(73) Proprietor: **Xiaomi Inc.
　　 Beijing 100085 (CN)**

(72) Inventors:
　　 • **Li, Ye
　　　 100085 Beijing (CN)**
　　 • **Zhang, Weiliang
　　　 100085 Beijing (CN)**
　　 • **Liu, Guoming
　　　 100085 Beijing (CN)**

(74) Representative: **Delumeau, François Guy et al
　　 Cabinet Beau de Loménie
　　 158, rue de l'Université
　　 75340 Paris Cedex 07 (FR)**

(56) References cited:
　　 **EP-A1- 2 408 181　　　　EP-A2- 2 426 574
　　 US-A1- 2002 024 506　　US-A1- 2008 030 360
　　 US-A1- 2012 188 243**

　　 • **Weinzierl, Maximilian: "Gerundete Fotowelten -
　　　 Verzerren mit dem Polarkoordinaten-Filter",
　　　 ColorFoto 1/2007 , January 2007 (2007-01), pages
　　　 104-109, XP002740287, Retrieved from the
　　　 Internet:
　　　 URL:http://dfpcorec-p.internal.epo.org/wf/
　　　 web/citenpl/citenpl.html?_url=http%3A//www .c
　　　 olorfoto.de/ratgeber/3/1/4/5/7/6/C-104-1
　　　 09_FP_Photoshop.pdf [retrieved on 2015-05-28]**
　　 • **Elke, Ulli: "Kugelbilder mit Photoshop", , 10
　　　 January 2014 (2014-01-10), pages 1-2,
　　　 XP002740288, Retrieved from the Internet:
　　　 URL:http://www.com-magazin.de/tipps-tricks
　　　 /photoshop/kugelbilder-photoshop-233905.ht ml
　　　 [retrieved on 2015-05-28]**

EP 2 927 787 B1

**Description**

TECHNICAL FIELD

The present disclosure relates to the field of terminal technology, and more particularly, to a method and a device for displaying a picture.

BACKGROUND

With the development of terminal technology, wallpaper functions of the terminal, as a forefront function of the terminal, affect users' experiences significantly. Thus, the development of wallpaper functions has attracted more attention.

The existing wallpaper functions are mostly introducing a variable of time into static wallpaper pictures. By setting the relationship between time periods and wallpaper pictures in advance, the terminal will display a corresponding wallpaper picture in a specific time period, so that the wallpaper pictures changes with time. Document EP 2 408 181 A1 describes a method for displaying a first one of a plurality of wallpapers on a touch screen of a mobile terminal based on a determined motion of the mobile terminal.

SUMMARY

The present disclosure provides a method and a device for displaying a picture. The technical solutions are as follows.

According to a first aspect, the invention relates to a method for displaying a picture according to Claim 1.

According to a second aspect, the invention relates to a device for displaying a picture according to Claim 5.

According to a third aspect, the invention relates to a terminal according to Claim 9.

In one particular embodiment, the steps of the method for displaying a picture are determined by computer program instructions.

Consequently, according to a fourth aspect, the invention is also directed to a computer program for executing the steps of a method for displaying a picture as described above when this program is executed by a computer or a processor of a terminal.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical schemes provided by the embodiments of the present disclosure have the following beneficial effects:

the posture information of the terminal is acquired, and the corresponding target area in the first preset picture is selected as the wallpaper picture to be displayed according to the posture information. In existing mobile phone, the displayed wallpaper is either static or changing with time. In this later case, the wallpaper to be displayed during a specific time period is defined in advance. According to the invention, the wallpaper is dynamically changed according to the different posture of the terminal, thereby interactivity between the user and the terminal when using the wallpaper picture function is improved.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is an illustrative flow chart showing a method for displaying a picture according to an exemplary embodiment of the present disclosure;

Fig. 2 is an illustrative flow chart showing a method for displaying a picture according to an exemplary embodiment of the present disclosure;

Fig. 3 is a block diagram showing the selecting of a target area of a first preset picture within a 3-dimensional coordinate system in a terminal in a method for displaying a picture according to an exemplary embodiment of the present disclosure;

Fig. 4 is a block diagram showing a device for displaying picture according to an exemplary embodiment of the present disclosure;

Fig. 5 is a block diagram showing a terminal device according to an exemplary embodiment of the present disclosure.

Specific embodiments of the present disclosure have been illustrated by way of example in the above drawings and are hereinafter described in detail. The drawings and written description are not intended to limit the scope of the inventive concepts in any manner. Rather, they are provided to illustrate the inventive concepts to one of ordinary skill in this art with reference to particular embodiments.

DETAILED DESCRIPTION

In order to make the purposes, technical solutions and advantages of the present disclosure more apparent, the further detailed description of the embodiments of the present disclosure will be given in conjunction with the accompanying drawings.

First Embodiment

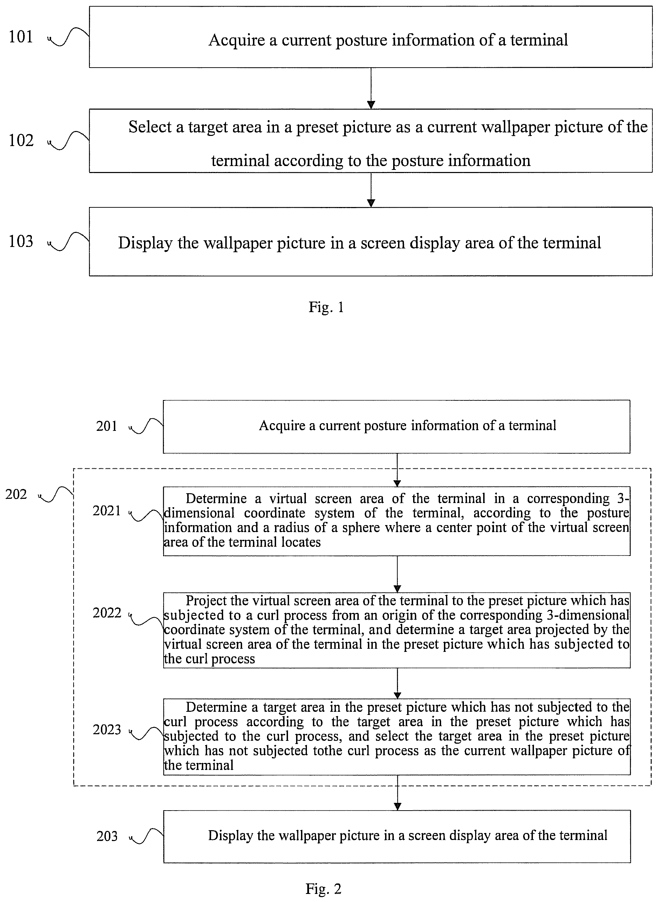

The embodiment of the present disclosure provides a method for displaying pictures. Referring to Fig. 1, the method process includes the following steps.

In step 101, a current posture information of a terminal is acquired, wherein the method of the present embodiment is used in the terminal.

In step 102, a target area of a first preset picture is selected as a current wallpaper picture of the terminal according to the posture information, wherein the method of the present embodiment is used in the terminal.

In step 103, the wallpaper picture is displayed in a screen display area of the terminal, wherein the method of the present embodiment is used in the terminal.

Note that, before the implementation of the embodiments of the present disclosure, a curl process could be performed to the first preset picture based on a curl algorithm so as to obtain the curled preset picture.

The resolution of the first preset picture is at least greater than or equal to a preset resolution. The first preset picture may be a built-in system picture in the terminal, or may be a picture taken by a user, or may be a picture obtained by the user from a third party such as the network. The first preset pictures that meet the preset resolution requirement may be curled based on the curl algorithm, so as to obtain a spherical picture. A target area in the spherical picture selected according to the user's posture information is consecutive in any direction.

Optionally, if the resolution of the first preset picture does not satisfy the resolution required for curling the spherical picture in the curl algorithm, a complete spherical picture may not be obtained as a result of the curl process. Therefore, before the curl algorithm process, whether the resolution of the first preset picture meets the resolution required for the spherical picture in the curl algorithm may be determined, if yes, the curl algorithm is performed; and if no, the parameters in the curl algorithm are changed, and then the curl algorithm is performed so as to obtain a cylindrical picture. For the cylindrical picture, the target area in the cylindrical picture selected according to the user's posture information can move only in a horizontal direction but not in a vertical direction.

When performing the curl process to the first preset picture, the first preset picture is curled into a sphere in accordance with a specific curvature. The center point of the sphere is an origin in a 3-dimensional coordinate system and is denoted by O, and its radius is denoted by R, and the sphere of the curled preset picture is denoted by $\varphi(O)$. Among them, the 3-dimensional coordinate system has the same directions as the coordinate system of a sensor in the terminal.

At this time, a length of a distance between the center point of a virtual screen area of the terminal and the origin of the 3-dimensional coordinate system needs to be set according to the value of the radius R, wherein the center point of the virtual screen area of the terminal is denoted by E. Among them, the origin O is set as the center point of the sphere, the radius of the sphere where a point E locates is marked as r, namely, the length of OE, and the sphere where the point E locates is marked as $\psi(O)$. In the embodiments of the present disclosure, the value of R may be set according to the relationship between the resolution of the first preset picture and the radius, and the value of r is set manually or by default of the system for meeting the optimal display effect of the wallpaper picture, wherein the ratio of R/r may have some proportional relationships, and R>r, which may be understood as that the virtual screen area of the terminal is within the corresponding spherical picture of the curled preset picture. Optionally, R/r=1.618, which is the Golden Ratio.

Because the first preset picture is a plane picture before being processed by the curl algorithm, the coordinate of each pixel in the first preset picture is a 2-dimensional orthogonal coordinate within a 2-dimensional coordinate system. The spherical or cylindrical picture obtained after the curl algorithm process is changed into a 3-dimensional cubic picture, thus, the coordinate of each pixel in the spherical or cylindrical picture is a 3-dimensional orthogonal coordinate within a 3-dimensional coordinate system. In the curl algorithm process, the corresponding relationship between the 2-dimensional orthogonal coordinate of each pixel in the first preset picture and the 3-dimensional orthogonal coordinate of each pixel in the curled preset picture will be recorded.

Optionally, the terminal may present the rendering picture of the spherical picture, which is obtained by curling the first preset picture, to the user, and adjust the effect of the spherical picture by providing tools such as prettification and blurring so as to reduce a stiff effect caused by the bonding of original boundaries of the first preset picture as much as possible.

The embodiments of the present disclosure acquire the posture information of the terminal, and select the corresponding target area in the first preset picture as the wallpaper picture to be displayed according to the posture information, which increases the interactivity between the user and the terminal when using the wallpaper function.

Second Embodiment

The embodiment of the present disclosure provides a method for displaying a picture. Referring to Fig. 2, the method process includes the following steps.

In step 201, a current posture information of a terminal is acquired, wherein the method of the present embodiment is used in the terminal.

Optionally, the trigger condition of step 201 may be:

when a screen of the terminal is lighted, the step of acquiring the current posture information of the terminal is performed periodically in a preset time interval.

After a screen of terminal is lighted, which may be entering a normal use state from an unlock state, step 201 is performed periodically. Therefore, the terminal can update the selected target area in the first preset picture continuously according to the posture information measured by the sensor.

The current posture information of the terminal is acquired by the sensor built in the terminal, and the sensor may include, but is not limited to, a gravity sensor, a gyroscope sensor, etc.

In the embodiments of the present disclosure, the posture information may include, but is not limited to, the Euler angle information in the 3-dimensional coordinate system of the terminal, wherein the Euler angles are three types of angle in the 3-dimensional coordinate system of the terminal, including: a right and left tilt angle, a back and forth tilt angle and a right and left swing angle, marked as $(\alpha, \beta, \gamma)$.

In step 202, a target area in a first preset picture is selected as a current wallpaper picture of the terminal according to the posture information, wherein the method of the present embodiment is used in the terminal.

Further, the step of selecting the target area in the first preset picture as the current wallpaper picture of the terminal in step 202 may be achieved by the following steps.

In step 2021, according to the posture information and a radius of a sphere where a center point of a virtual screen area of the terminal locates, the virtual screen area of the terminal is determined in a corresponding 3-dimensional coordinate system of the terminal, wherein the method of the present embodiment is used in the terminal.

Among them, in step 2021, a coordinate of the center point of the virtual screen area of the terminal is firstly determined according to the posture information, so as to determine the location of the virtual screen area of the terminal in the 3-dimensional coordinate system of the terminal according to the coordinate.

According to $(\alpha, \beta, \gamma)$ and r in the posture information, a spherical coordinate of a point E in the 3-dimensional coordinate system may be obtained. Among them, because the point E is located on the sphere $\psi$ (O), and OE is perpendicular to the virtual screen area of the terminal, and also because in the posture information of the terminal, the point E is not affected by the right and left swing angle $\gamma$, the location coordinate of the point E is marked as: $(\alpha', \beta', r)$, wherein $\alpha'= \alpha+\pi/2$, $\beta'= \beta-\pi/2$, thus the location coordinate of the point E is $(\alpha+\pi/2, \beta-\pi/2, r)$. The posture of the virtual screen area of the terminal is the location of the point E and the right and left swing angle of the terminal, that is $(\alpha', \beta', r, \gamma)$.

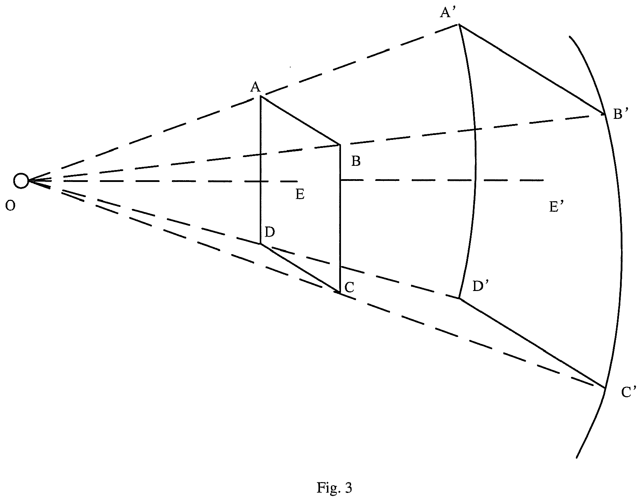

Assuming that a length and a width of the virtual screen area of the terminal are "a" and "b" respectively, then the spherical coordinate of the virtual screen area of the terminal may be determined according to the spherical coordinate of the point E, marked as: $(\alpha', \beta', r, \gamma, a, b)$. Fig. 3 illustrates the block diagram of the step of selecting the target area in the first preset picture in the 3-dimensional coordinate system of the terminal, including the location of the virtual screen of the terminal, wherein, a plane area corresponding to ABCD is the virtual screen area of the terminal.

In step 2022, the virtual screen area of the terminal is projected to the curled preset picture from an origin of the corresponding 3-dimensional coordinate system of the terminal, and a target area projected by the virtual screen area of the terminal in the curled preset picture is determined, wherein the method of the present embodiment is used in the terminal.

Since R>r, the target area projected by the virtual screen area of the terminal in the curled preset picture from the origin may have an area larger than that of the virtual screen area of the terminal. As shown in Fig. 3, the area A'B'C'D' in the figure is the projected target area, E' is the center point of the area A'B'C'D', and OE'=R.

According to the principle of similarity, the spherical coordinate of the corresponding target area of A'B'C'D' may be obtained by the following method:

$$(\alpha', \beta', r, \gamma, a, b)*R/r=(\alpha, \beta', R, \gamma, a*R/r, b*R/r),$$

wherein the spherical coordinate of the point E' is marked as ($\alpha$', $\beta$', R).

Thus, step 2022 may be further explained as:

according to a ratio between the radius of the sphere where the center point of the virtual screen area of the terminal locates and the radius of the sphere where the curled preset picture locates, and the spherical coordinate of the virtual screen area of the terminal, the target area projected by the virtual screen area of the terminal in the curled preset picture is determined.

In step 2023, according to the target area in the curled preset picture, a target area in the first preset picture is determined, and the target area in the first preset picture is selected as the current wallpaper picture of the terminal, wherein the present embodiment is used in the terminal.

The step of determining the target area in the first preset picture by using the target area in the curled preset picture in step 2023 may be achieved by the following steps.

In step 20231, according to the spherical coordinate of the target area in the curled preset picture, the 3-dimensional orthogonal coordinate of each vertex of the target area in the curled preset picture is calculated, wherein the method of the present embodiment is used in the terminal.

Among them, the transition relationship between the spherical coordinate and the 3-dimensional orthogonal coordinate is:

$$x = r * \cos \alpha *\cos \beta;$$

$$y = r * \sin \alpha *\cos \beta;$$

$$z = r * \sin \beta.$$

The spherical coordinate of the point E' is transferred into the 3-dimensional orthogonal coordinate: (R* cos $\alpha$'*cos $\beta$', R * sin $\alpha$'*cos $\beta$', R * sin $\beta$'), and marked as (x, y, z).

Assuming that the 3-dimensional orthogonal coordinate of the point A' is (x', y', z'), the values of x', y', z' may be solved by the following equations set:

$$\left(x'-x\right)*x+\left(y'-y\right)*y+\left(z'-z\right)*z = 0$$

$$y'^{2}+z'^{2} = x^{2}+y^{2}+z^{2}+\left(a^{2}+b^{2}\right)$$

Four solutions may be solved by the equations set, so that the corresponding 3-dimensional orthogonal coordinates of A', B', C', and D' may be obtained.

In step 20232, in the corresponding relationship between the 2-dimensional orthogonal coordinate and the 3-dimensional orthogonal coordinate of pixels in the first preset picture, the 2-dimensional orthogonal coordinate of each vertex of the target area in the first preset picture corresponding to the 3-dimensional orthogonal coordinate of each vertex of the target area in the curled preset picture is determined, wherein the method of the present embodiment is used in the terminal.

In step 20233, according to the 2-dimensional orthogonal coordinate of each vertex of the target area in the first preset picture, the target area in the first preset picture is determined, and the target area in the first preset picture is selected as the current wallpaper picture of the terminal, wherein the method of the present embodiment is used in the terminal.

In step 203, the wallpaper picture is displayed in a screen display area of the terminal, wherein the method of the present embodiment is used in the terminal.

In this step, the wallpaper picture is displayed in the screen display area of the terminal by using the wallpaper function.

The embodiments of the present disclosure acquires the posture information of the terminal, and selects the corresponding target area in the first preset picture as the wallpaper to be displayed according to the posture information, thereby improving the interactivity between the user and the terminal when using the wallpaper picture function.

Third Embodiment

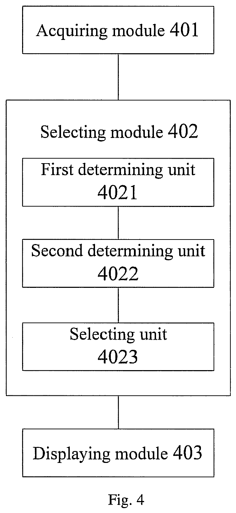

The embodiment of the present disclosure provides a device for displaying a picture. Referring to Fig. 4, the device includes:

an acquiring module 401 configured to acquire a current posture information of a terminal;

a selecting module 402 configured to select a target area in a first preset picture as a current wallpaper picture of the terminal according to the posture information; and

a displaying module 403 configured to display the wallpaper picture in a screen display area of the terminal.

Among them, the selecting module 402 includes:

a first determining unit 4021 configured to determine a virtual screen area of the terminal in a corresponding 3-dimensional coordinate system of the terminal according to the posture information and a radius of a sphere where a center point of the virtual screen area of the terminal locates;

a second determining unit 4022 configured to, project the virtual screen area of the terminal to the curled preset picture from an origin of the corresponding 3-dimensional coordinate system of the terminal, and determine a target area projected by the virtual screen area of the terminal in the curled preset picture ; and

a selecting unit 4023 configured to determine a target area in the first preset picture according to the target area in the curled preset picture, and select the target area in the first preset picture as the current wallpaper picture of the terminal.

Among them, the second determining unit 4022 is configured to determine the target area projected by the virtual screen area of the terminal in the curled preset picture, according to a ratio between the radius of the sphere where the center point of the virtual screen area of the terminal locates and a radius of a sphere where the curled preset picture locates, and a spherical coordinate of the virtual screen area of the terminal.

Among them, the selecting unit 4023 includes:

a calculating sub-unit configured to calculate a 3-dimensional orthogonal coordinate of each vertex of the target area in the curled preset picture, according to the spherical coordinate of the target area in the curled preset picture;

a determining sub-unit configured to determine a 2-dimensional orthogonal coordinate of each vertex of the target area in the first preset picture corresponding to the 3-dimensional orthogonal coordinate of each vertex of the target area in the curled preset picture, in a relationship between the 2-dimensional orthogonal coordinate and the 3-dimensional orthogonal coordinate of pixels in the first preset picture; and

a selecting sub-unit configured to determine the target area in the first preset picture according to the 2-dimensional orthogonal coordinate of each vertex of the target area in the first preset picture, and select the target area in the first preset picture as the current wallpaper picture of the terminal.

Among them, the acquiring module 401 is configured to:

when a screen of the terminal is lighted, perform the step of acquiring the current posture information of the terminal periodically in a preset time interval.

The embodiments of the present disclosure acquires the posture information of the terminal, and selects the corresponding target area in the first preset picture as the wallpaper to be displayed according to the posture information, thereby improving the interactivity between the user and the terminal when using the wallpaper picture function.

Fourth Embodiment

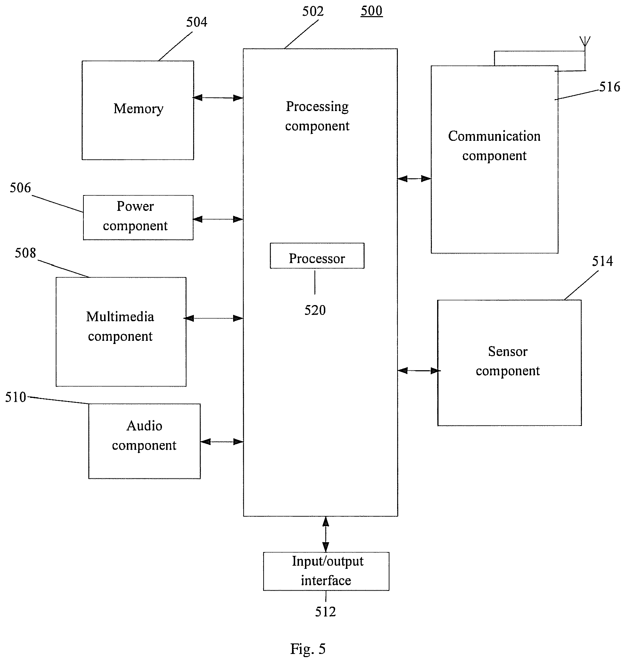

The embodiment of the present disclosure provides a terminal device as shown in Fig. 5, which is a block diagram showing a terminal device according to an exemplary embodiment. For example, the terminal device 500 may be a mobile phone, a computer, a digital broadcasting terminal, a messaging device, a game console, a tablet device, a medical equipment, a fitness equipment, a personal digital assistant, etc.

Referring to Fig. 5, the terminal device 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the terminal device 500, such as the operations associated with display, telephone calls, data communications, camera operations and recording operations. The processing component 502 may include one or more processors 520 to execute instructions to perform all or part of the steps in the above described methods. Moreover, the processing component 502 may include one or more modules which facilitate the interaction between the processing component 502 and other components. For instance, the processing component 502 may include a multimedia module to facilitate the interaction between the multimedia component 508 and the processing component 502.

The memory 504 is configured to store various types of data to support the operation of the terminal device 500. Examples of such data include instructions for any applications or methods operated on the terminal device 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the terminal device 500. The power component 506 may include a power management system, one or more power sources, and any other components associated with the generation, management, and distribution of power for the terminal device 500.

The multimedia component 508 includes a screen providing an output interface between the terminal device 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slipes, and gestures on the touch panel. The touch sensors may not only sense a boundary of a touch or slipe action, but also sense a period of time and a pressure associated with the touch or slipe action. In some embodiments, the multimedia component 508 includes a front camera and/or a rear camera. The front camera and the rear camera may receive an external multimedia datum while the terminal device 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone ("MIC") configured to receive an external audio signal when the terminal device 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the terminal device 500. For instance, the sensor component 514 may detect an open/closed status of the terminal device 500, relative positioning of components (e.g., the display and the keypad of the terminal device 500), a change in position of the terminal device 500 or a component of the terminal device 500, a presence or absence of user contact with the terminal device 500, an orientation or an acceleration/deceleration of the terminal device 500, and a change in temperature of the terminal device 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor, or a temperature sensor.

The communication component 516 is configured to facilitate communication, wired or wirelessly, between the terminal device 500 and other devices. The terminal device 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal device 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable memory medium including instructions, such as to be included in the memory 504 and executable by the processor 520 in the terminal device 500 for performing the above-described methods. For example, the non-transitory computer-readable storage medium may be a ROM, a RAM, a CD-ROM, a magnetic tape, a floppy disc, an optical data memory device, and the like.

When instructions in the non-transitory computer readable storage medium are executed by a processor of a mobile terminal, the terminal device is enabled to perform a method for displaying a picture, the method includes:

acquiring a current posture information of the terminal;
selecting a target area in the first preset picture as a current wallpaper picture of the terminal, according to the acquired posture information; and
displaying the wallpaper picture on a screen display area of the terminal.

Among them, the step of selecting the target area in the first preset picture as the current wallpaper picture of the terminal according to the posture information includes:

determining a virtual screen area of the terminal in a corresponding 3-dimensional coordinate system of the terminal, according to the posture information and a radius of a sphere where a center point of the virtual screen area of the terminal locates;
projecting the virtual screen area of the terminal to the curled preset picture from an origin of the corresponding 3-dimensional coordinate system of the terminal, and determining a target area projected by the virtual screen area of the terminal in the curled preset picture; and
determining a target area in the first preset picture according to the target area in the curled preset, and selecting the target area in the first preset picture as the current wallpaper picture of the terminal.

Among them, the step of determining the target area projected by the virtual screen area of the terminal in the curled preset picture by projecting the virtual screen area of the terminal to the curled preset picture from the origin of the corresponding 3-dimensional coordinate system of the terminal includes:

determining the target area projected by the virtual screen area of the terminal in the curled preset picture, according to a ratio between the radius of the sphere where the center point of the virtual screen area of the terminal locates and a radius of a sphere where the curled preset picture locates, and a spherical coordinate of the virtual screen area of the terminal.

Among them, the step of determining the target area in the first preset picture according to the target area in the curled preset picture, and the step of selecting the target area in the first preset picture as the current wallpaper picture of the terminal includes:

calculating a 3-dimensional orthogonal coordinate of each vertex of the target area in the curled preset picture according to a spherical coordinate of the target area in the curled preset picture;
in a corresponding relationship between a 2-dimensional orthogonal coordinate and the 3-dimensional orthogonal coordinate of pixels in the first preset picture, determining the 2-dimensional orthogonal coordinate of each vertex of the target area in the preset picture corresponding to the 3-dimensional orthogonal coordinate of each vertex of the target area in the curled preset picture; and
determining the target area in the first preset picture according to the 2-dimensional orthogonal coordinate of each vertex of the target area in the first preset picture, and selecting the target area in the first preset picture as the current wallpaper picture of the terminal.

Among them, the step of acquiring the current posture information of the terminal includes:

after a screen of the terminal is lighted, the step of acquiring the current posture information of the terminal is performed periodically in a preset time interval.

The embodiments of the present disclosure acquire the posture information of the terminal, and select the corresponding target area in the first preset picture as the wallpaper picture to be displayed according to the acquired posture information, thereby improving the interactivity between the user and the terminal when using the wallpaper picture function.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

**Claims**

1. A method for displaying a picture comprising:

   acquiring (201) a current posture information of a terminal;
   selecting (202) a target area in a first preset picture as a current wallpaper picture of the terminal according to the posture information; and
   displaying (203) the wallpaper picture in a screen display area of the terminal,
   said method **characterized in that**

   • said current posture information comprises an Euler angle information $\alpha, \beta, \gamma$ in a 3-dimensional coordinate system of originate O and having the same directions as a coordinate system of a sensor in the terminal wherein $\alpha, \beta, \gamma$ correspond to a right and left tilt angle, a back and forth tilt angle and a right and left swing angle;
   • the step of selecting (202) the target area in said first preset picture as the current wallpaper picture of the terminal according to the posture information comprises:

   ○ determining (2021) a virtual screen area of the terminal as a plane area of length a and of width b according to the posture information, said virtual screen area being perpendicular to OE, wherein E is a center point of said plane area defined by coordinates $\alpha+\pi/2, \beta-\pi/2, r$ where r is the length of OE and wherein said right and left swing angle of said plane area is $\gamma$ ;
   ○ projecting (2022) the virtual screen area of the terminal to a spherical picture from said originate O, said spherical picture being obtained by curling said first preset picture into a sphere;
   ○ determining a target area projected by the virtual screen area of the terminal in said spherical picture; and
   ○ determining (2023) a target area in said first preset picture according to the target area in said spherical picture, and selecting the target area in said first preset picture as the current wallpaper picture of the terminal.

2. The method according to claim 1, **characterized in that** the step of projecting (2022) the virtual screen area of the terminal and the step of determining (2023) a target area in said first preset picture comprises:

   determining the target area projected by the virtual screen area of the terminal in said spherical picture, according to a ratio between said length r and a radius (R) of a sphere where said spherical picture locates, and a spherical coordinate of the virtual screen area of the terminal.

3. The method according to claim 2, **characterized in that** the step of determining the target area and the step of selecting the target area comprises:

   calculating a 3-dimensional orthogonal coordinate of each vertex of the target area in said spherical picture according to a spherical coordinate of the target area in said spherical picture;
   in a corresponding relationship between a 2-dimensional orthogonal coordinate and the 3-dimensional orthogonal coordinate of pixels in said first preset picture, determining the 2-dimensional orthogonal coordinate of each vertex of the target area in said first preset picture corresponding to the 3-dimensional orthogonal coordinate of each vertex of the target area in said spherical picture; and

determining the target area in said first preset picture according to the 2-dimensional orthogonal coordinate of each vertex of the target area in said first preset picture, and selecting the target area in said first preset picture as the current wallpaper picture of the terminal.

4. The method according to claim 1, **characterized in that** the step of acquiring the current posture information of the terminal comprises:

after a screen of the terminal is lighted, the step of acquiring the current posture information of the terminal is performed periodically in a preset time interval.

5. A device for displaying a picture, **characterized in that** the device comprises:

an acquiring module (401) configured to acquire a current posture information of a terminal;
a selecting module (402) configured to select a target area in a first preset picture as a current wallpaper picture of the terminal according to the posture information; and
a displaying module (403) configured to display the wallpaper picture on a screen display area of the terminal;
said device being **characterized in that** said current posture information comprises an Euler angle information $\alpha$, $\beta$, $\gamma$ in a 3-dimensional coordinate system of originate O and having the same directions as a coordinate system of a sensor in the terminal wherein $\alpha$, $\beta$, $\gamma$ correspond to a right and left tilt angle, a back and forth tilt angle and a right and left swing angle and **in that** the selecting module (402) comprises:

a first determining unit (4021) configured to determine a virtual screen area of the terminal as a plane area of length a and of width b according to the posture information, said virtual screen area being perpendicular to OE, wherein E is a center point of said plane area defined by coordinates $\alpha+\pi/2$, $\beta-\pi/2$, r where r is the length of OE and wherein said right and left swing angle of said plane area is $\gamma$;
a second determining unit (4022) configured to project the virtual screen area of the terminal to a spherical picture from said originate O, said spherical picture being obtained by curling said first preset picture into a sphere and determining a target area projected by the virtual screen area of the terminal in said spherical picture; and
a selecting unit (4023) configured to determine a target area in said first preset picture according to the target area in said spherical picture, and selecting the target area in said first preset picture as the current wallpaper picture of the terminal.

6. The device according to claim 5, **characterized in that** the second determining unit (4022) is configured to:

determine the target area projected by the virtual screen area of the terminal in said spherical picture, according to a ratio between said length r and a radius (R) of a sphere where said spherical picture locates, and a spherical coordinate of the virtual screen area of the terminal.

7. The device according to claim 5, **characterized in that** the selecting unit (4023) comprises:

a calculating sub-unit configured to calculate a 3-dimensional orthogonal coordinate of each vertex of the target area in said spherical picture according to a spherical coordinate of the target area in the said spherical picture;
a determining sub-unit configured to determine a 2-dimensional orthogonal coordinate of each vertex of the target area in said first preset picture corresponding to the 3-dimensional orthogonal coordinate of each vertex of the target area in said spherical picture, in a corresponding relationship between the 2-dimensional orthogonal coordinate and the 3-dimensional orthogonal coordinate of pixels in said first preset picture; and
a selecting sub-unit configured to determine the target area in said first preset picture according to the 2-dimensional orthogonal coordinate of each vertex of the target area in said first preset picture, and select the target area in said first preset picture as the current wallpaper picture of the terminal.

8. The device according to claim 5, **characterized in that** the acquiring module is configured to perform periodically the step of acquiring the current posture information of the terminal in a preset time interval after a screen of the terminal is lighted.

9. A terminal (500) comprising:

a processor (520);

a memory (504) for storing instructions executable by the processor (520); wherein the processor (520) is configured for executing the steps of a method for displaying a picture according to any one of claims 1 to 4.

10. A computer program including instructions for executing the steps of a method for displaying a picture according to any one of claims 1 to 4 when said program is executed by a computer.

11. A recording medium readable by a computer and having recorded thereon a computer program including instructions for executing the steps of a method for displaying a picture according to any one of claims 1 to 4.

**Patentansprüche**

1. Verfahren zum Anzeigen eines Bildes, umfassend:

Erfassen (201) einer aktuellen Lage-Information eines Endgerätes,
Auswählen (202) eines Zielbereichs in einem ersten voreingestellten Bild als ein aktuelles Bildschirmhintergrund-Bild des Endgerätes gemäß der Lage-Information, und
Anzeigen (203) des Büdschirmhintergrund-Bildes in einem Bildschirmanzeigebereich des Endgerätes, wobei das Verfahren **dadurch gekennzeichnet ist, dass**

• die aktuelle Lage-Information eine Eulerwinkel-Information $\alpha$, $\beta$, $\gamma$ in einem dreidimensionalen Koordinatensystem der Originate O umfasst, das die gleichen Richtungen wie ein Koordinatensystem eines Sensors in dem Endgerät aufweist, wobei $\alpha$, $\beta$, $\gamma$ einem Rechts-links-Neigungswinkel, einem Vorwärts-rückwärts-Neigungswinkel und einem Rechts-links-Schwenkwinkel entsprechen,
• der Schritt des Auswählens (202) des Zielbereichs in dem ersten voreingestellten Bild als das aktuelle Bildschirmhintergrund-Bild des Endgerätes gemäß der Lage-Information umfasst:

∘ Bestimmen (2021) eines virtuellen Bildschirmbereichs des Endgerätes als eine Ebenenbereich der Länge a und der Breite b gemäß der Lage-Information, wobei der virtuelle Bildschirmbereich senkrecht zu OE verläuft, wobei E ein Mittelpunkt des Ebenenbereichs ist, der durch die Koordinaten $\alpha+\pi/2$, $\beta$-n/2, r definiert wird, wobei r die Länge von OE ist, und wobei der Rechts-links-Schwenkwinkel des Ebenenbereichs $\gamma$ ist,
∘ Projizieren (2022) des virtuellen Bildschirmbereichs des Endgerätes auf ein sphärisches Bild von der Originate O aus, wobei das sphärische Bild durch Einrollen des ersten voreingestellten Bildes zu einer Kugel erhalten wird,
∘ Bestimmen eines Zielbereichs, der durch den virtuellen Bildschirmbereich des Endgerätes in dem sphärischen Bild projiziert wird, und
∘ Bestimmen (2023) eines Zielbereichs in dem ersten voreingestellten Bild gemäß dem Zielbereich in dem sphärischen Bild, und Auswählen des Zielbereichs in dem ersten voreingestellten Bild als das aktuelle Bildschirmhintergrund-Bild des Endgerätes.

2. Verfahren nach Anspruch 1, **dadurch gekennzeichnet, dass** der Schritt des Projizierens (2022) des virtuellen Bildschirmbereichs des Endgerätes und der Schritt des Bestimmens (2023) eines Zielbereichs in dem ersten voreingestellten Bild umfasst:

Bestimmen des Zielbereichs, der durch den virtuellen Bildschirmbereich des Endgerätes in dem sphärischen Bild projiziert wird, gemäß einem Verhältnis zwischen der Länge r und einem Radius (R) einer Kugel, wo sich das sphärische Bild befindet, und einer sphärischen Koordinate des virtuellen Bildschirmbereichs des Endgerätes.

3. Verfahren nach Anspruch 2, **dadurch gekennzeichnet, dass** der Schritt des Bestimmens des Zielbereichs und der Schritt des Auswählens des Zielbereichs umfasst:

Berechnen einer dreidimensionalen orthogonalen Koordinate jedes Scheitelpunktes des Zielbereichs in dem sphärischen Bild gemäß einer sphärischen Koordinate des Zielbereichs in dem sphärischen Bild,
in einer entsprechenden Beziehung zwischen einer zweidimensionalen orthogonalen Koordinate und der dreidimensionalen orthogonalen Koordinate von Pixeln in dem ersten voreingestellten Bild, Bestimmen der zweidimensionalen orthogonalen Koordinate jedes Scheitelpunktes des Zielbereichs in dem ersten voreingestellten Bild entsprechend der dreidimensionalen orthogonalen Koordinate jedes Scheitelpunktes des Zielbereichs in dem sphärischen Bild, und

Bestimmen des Zielbereichs in dem ersten voreingestellten Bild gemäß der zweidimensionalen orthogonalen Koordinate jedes Scheitelpunktes des Zielbereichs in dem ersten voreingestellten Bild, und Auswählen des Zielbereichs in dem ersten voreingestellten Bild als das aktuelle Bildschirmhintergrund-Bild des Endgerätes.

4. Verfahren nach Anspruch 1, **dadurch gekennzeichnet, dass** der Schritt des Erfassens der aktuellen Lage-Information des Endgerätes umfasst:

nachdem ein Bildschirm des Endgerätes beleuchtet wurde, wird der Schritt des Erfassens der aktuellen Lage-Information des Endgerätes periodisch in einem voreingestellten Zeitintervall ausgeführt.

5. Vorrichtung zum Anzeigen eines Bildes, **dadurch gekennzeichnet, dass** die Vorrichtung umfasst:

ein Erfassungsmodul (401), das dafür konfiguriert ist, eine aktuelle Lage-Information eines Endgerätes zu erfassen,

ein Auswahlmodul (402), das dafür konfiguriert ist, einen Zielbereich in einem ersten voreingestellten Bild als ein aktuelles Bildschirmhintergrund-Bild des Endgerätes gemäß der Lage-Informaüon auszuwählen, und

ein Anzeigemodul (403), das dafür konfiguriert ist, das Bildschirmhintergrund-Bild auf einem Bildschirmanzeigebereich des Endgerätes anzuzeigen,

wobei die Vorrichtung **dadurch gekennzeichnet ist, dass** die aktuelle Lage-Information eine Eulerwinkel-Information $\alpha$, $\beta$, $\gamma$ in einem dreidimensionalen Koordinatensystem der Originate O umfasst, das die gleichen Richtungen wie ein Koordinatensystem eines Sensors in dem Endgerät aufweist, wobei $\alpha$, $\beta$, $\gamma$ einem Rechts-links-Neigungswinkel, einem Vorwärts-rückwärts-Neigungswinkel und einem Rechts-links-Schwenkwinkel entsprechen, und dadurch, dass das Auswahlmodul (402) umfasst:

eine erste Bestimmungseinheit (4021), die dafür konfiguriert ist, einen virtuellen Bildschirmbereich des Endgerätes als eine Ebenenbereich der Länge a und der Breite b gemäß der Lage-Information zu bestimmen, wobei der virtuelle Bildschirmbereich senkrecht zu OE verläuft, wobei E ein Mittelpunkt des Ebenenbereichs ist, der durch die Koordinaten $\alpha+\pi/2$, $\beta-\pi/2$, r definiert wird, wobei r die Länge von OE ist, und wobei der Rechts-links-Schwenkwinkel des Ebenenbereichs $\gamma$ ist,

eine zweite Bestimmungseinheit (4022), die dafür konfiguriert ist, den virtuellen Bildschirmbereich des Endgerätes auf ein sphärisches Bild von der Originate O aus zu projizieren, wobei das sphärische Bild durch Einrollen des ersten voreingestellten Bildes zu einer Kugel erhalten wird, und einen Zielbereich zu bestimmen, der durch den virtuellen Bildschirmbereich des Endgerätes in dem sphärischen Bild projiziert wird, und

eine Auswahleinheit (4023), die dafür konfiguriert ist, einen Zielbereich in dem ersten voreingestellten Bild gemäß dem Zielbereich in dem sphärischen Bild zu bestimmen, und den Zielbereich in dem ersten voreingestellten Bild als das aktuelle Bildschirmhintergrund-Bild des Endgerätes auszuwählen.

6. Vorrichtung nach Anspruch 5, **dadurch gekennzeichnet, dass** die zweite Bestimmungseinheit (4022) konfiguriert ist zum:

Bestimmen des Zielbereichs, der durch den virtuellen Bildschirmbereich des Endgerätes in dem sphärischen Bild projiziert wird, gemäß einem Verhältnis zwischen der Länge r und einem Radius (R) einer Kugel, wo sich das sphärische Bild befindet, und einer sphärischen Koordinate des virtuellen Bildschirmbereichs des Endgerätes.

7. Vorrichtung nach Anspruch 5, **dadurch gekennzeichnet, dass** die Auswahleinheit (4023) umfasst:

eine Berechnungs-Untereinheit, die dafür konfiguriert ist, eine dreidimensionale orthogonale Koordinate jedes Scheitelpunktes des Zielbereichs in dem sphärischen Bild gemäß einer sphärischen Koordinate des Zielbereichs in dem sphärischen Bild zu berechnen,

eine Bestimmungs-Untereinheit, die dafür konfiguriert ist, eine zweidimensionale orthogonale Koordinate jedes Scheitelpunktes des Zielbereichs in dem ersten voreingestellten Bild entsprechend der dreidimensionalen orthogonalen Koordinate jedes Scheitelpunktes des Zielbereichs in dem sphärischen Bild in einer entsprechenden Beziehung zwischen der zweidimensionalen orthogonalen Koordinate und der dreidimensionalen orthogonalen Koordinate von Pixeln in dem ersten voreingestellten Bild zu bestimmen, und

eine Auswahl-Untereinheit, die dafür konfiguriert ist, den Zielbereich in dem ersten voreingestellten Bild gemäß der zweidimensionalen orthogonalen Koordinate jedes Scheitelpunktes des Zielbereichs in dem ersten voreingestellten Bild zu bestimmen, und den Zielbereich in dem ersten voreingestellten Bild als das aktuelle Bildschirmhintergrund-Bild des Endgerätes auszuwählen.

**8.** Vorrichtung nach Anspruch 5, **dadurch gekennzeichnet, dass** das Erfassungsmodul dafür konfiguriert ist, periodisch den Schritt des Erfassens der aktuellen Lage-Information des Endgerätes in einem voreingestellten Zeitintervall auszuführen, nachdem ein Bildschirm des Endgerätes beleuchtet wurde.

**9.** Endgerät (500), umfassend:

einen Prozessor (520),
einen Speicher (504) zum Speichern von Anweisungen, die durch den Prozessor (520) ausgeführt werden können,
wobei der Prozessor (520) dafür konfiguriert ist, die Schritte eines Verfahrens zum Anzeigen eines Bildes nach einem der Ansprüche 1 bis 4 auszuführen.

**10.** Computerprogramm, das Anweisungen zum Ausführen der Schritte eines Verfahrens zum Anzeigen eines Bildes nach einem der Ansprüche 1 bis 4 enthält, wenn das Programm durch einen Computer ausgeführt wird.

**11.** Aufzeichnungsmedium, das durch einen Computer gelesen werden kann und auf dem ein Computerprogramm aufgezeichnet ist, das Anweisungen zum Ausführen der Schritte eines Verfahrens zum Anzeigen eines Bildes nach einem der Ansprüche 1 bis 4 enthält.

**Revendications**

**1.** Procédé d'affichage d'une image comprenant les étapes ci-dessous consistant à :

acquérir (201) des informations de posture en cours d'un terminal ;
sélectionner (202) une zone cible dans une première image prédéfinie en tant qu'une image de fond d'écran en cours du terminal selon les informations de posture ; et
afficher (203) l'image de fond d'écran dans une zone d'affichage à l'écran du terminal, ledit procédé étant **caractérisé en ce que** :

• lesdites informations de posture en cours comportent des informations d'angle d'Euler $\alpha$, $\beta$, $\gamma$, dans un système de coordonnées tridimensionnelles d'origine O et présentant la même direction qu'un système de coordonnées d'un capteur dans le terminal, dans lequel $\alpha$, $\beta$, $\gamma$, correspondent à un angle d'inclinaison vers la droite et vers la gauche, à un angle d'inclinaison vers l'avant et vers l'arrière, et à un angle de balancement vers la droite et vers la gauche ;
• l'étape de sélection (202) de la zone cible dans ladite première image prédéfinie en tant que l'image de fond d'écran en cours du terminal selon les informations de posture, comporte les étapes ci-dessous consistant à :

◦ déterminer (2021) une zone d'écran virtuelle du terminal en tant qu'une zone plane de longueur « a » et de largeur « b » selon les informations de posture, ladite zone d'écran virtuelle étant perpendiculaire à OE, dans lequel E est un point central de ladite zone plane, défini par des coordonnées $\alpha + \pi/2$, $\beta - \pi/2$, r où « r » est la longueur de OE, et dans lequel ledit angle de balancement vers la droite et vers la gauche de ladite zone plane est $\gamma$ ;
◦ projeter (2022) la zone d'écran virtuelle du terminal sur une image sphérique à partir de ladite origine O, ladite image sphérique étant obtenue en bouclant ladite première image prédéfinie dans une sphère ;
◦ déterminer une zone cible projetée par la zone d'écran virtuelle du terminal dans ladite image sphérique ; et
◦ déterminer (2023) une zone cible dans ladite première image prédéfinie selon la zone cible dans ladite image sphérique, et sélectionner la zone cible dans ladite première image prédéfinie en tant que l'image de fond d'écran en cours du terminal.

**2.** Procédé selon la revendication 1, **caractérisé en ce que** l'étape de projection (2022) de la zone d'écran virtuelle du terminal, et l'étape de détermination (2023) d'une zone cible dans ladite première image prédéfinie comportent l'étape ci-dessous consistant à :

déterminer la zone cible projetée par la zone d'écran virtuelle du terminal dans ladite image sphérique, selon un rapport entre ladite longueur « r » et un rayon (R) d'une sphère où ladite image sphérique se situe, et une coordonnée sphérique de la zone d'écran virtuelle du terminal.

**3.** Procédé selon la revendication 2, **caractérisé en ce que** l'étape de détermination de la zone cible et l'étape de sélection de la zone cible comportent les étapes ci-dessous consistant à :

calculer une coordonnée orthogonale tridimensionnelle de chaque sommet de la zone cible dans ladite image sphérique selon une coordonnée sphérique de la zone cible dans ladite image sphérique ;
dans une relation de correspondance entre une coordonnée orthogonale bidimensionnelle et la coordonnée orthogonale tridimensionnelle de pixels dans ladite première image prédéfinie, déterminer la coordonnée orthogonale bidimensionnelle de chaque sommet de la zone cible dans ladite première image prédéfinie correspondant à la coordonnée orthogonale tridimensionnelle de chaque sommet de la zone cible dans ladite image sphérique ; et
déterminer la zone cible dans ladite première image prédéfinie selon la coordonnée orthogonale bidimensionnelle de chaque sommet de la zone cible dans ladite première image prédéfinie, et sélectionner la zone cible dans ladite première image prédéfinie en tant que l'image de fond d'écran en cours du terminal.

**4.** Procédé selon la revendication 1, **caractérisé en ce que**, à l'étape d'acquisition des informations de posture en cours du terminal :

dès lors qu'un écran du terminal est allumé, l'étape d'acquisition des informations de posture en cours du terminal est mise en oeuvre périodiquement dans un intervalle de temps prédéfini.

**5.** Dispositif destiné à afficher une image, **caractérisé en ce que** le dispositif comprend :

un module d'acquisition (401) configuré de manière à acquérir des informations de posture en cours d'un terminal ;
un module de sélection (402) configuré de manière à sélectionner une zone cible dans une première image prédéfinie en tant qu'une image de fond d'écran en cours du terminal selon les informations de posture ; et
un module d'affichage (403) configuré de manière à afficher l'image de fond d'écran dans une zone d'affichage à l'écran du terminal ;
ledit dispositif étant **caractérisé en ce que** lesdites informations de posture en cours comportent des informations d'angle d'Euler $\alpha$, $\beta$, $\gamma$, dans un système de coordonnées tridimensionnelles d'origine O et présentant les mêmes directions qu'un système de coordonnées d'un capteur dans le terminal, dans lequel $\alpha$, $\beta$, $\gamma$, correspondent à un angle d'inclinaison vers la droite et vers la gauche, à un angle d'inclinaison vers l'avant et vers l'arrière, et à un angle de balancement vers la droite et vers la gauche, et **en ce que** le module de sélection (402) comporte :

une première unité de détermination (4021) configurée de manière à déterminer une zone d'écran virtuelle du terminal en tant qu'une zone plane de longueur « a » et de largeur « b » selon les informations de posture, ladite zone d'écran virtuelle étant perpendiculaire à OE, dans lequel E est un point central de ladite zone plane, défini par des coordonnées $\alpha + \pi/2$, $\beta - \pi/2$, r où « r » est la longueur de OE, et dans lequel ledit angle de balancement vers la droite et vers la gauche de ladite zone plane est $\gamma$ ;
une seconde unité de détermination (4022) configurée de manière à projeter la zone d'écran virtuelle du terminal sur une image sphérique à partir de ladite origine O, ladite image sphérique étant obtenue en bouclant ladite première image prédéfinie dans une sphère, et à déterminer une zone cible projetée par la zone d'écran virtuelle du terminal dans ladite image sphérique ; et
une unité de sélection (4023) configurée de manière à déterminer une zone cible dans ladite première image prédéfinie selon la zone cible dans ladite image sphérique, et à sélectionner la zone cible dans ladite première image prédéfinie en tant que l'image de fond d'écran en cours du terminal.

**6.** Dispositif selon la revendication 5, **caractérisé en ce que** la deuxième unité de détermination (4022) est configurée de manière à :

déterminer la zone cible projetée par la zone d'écran virtuelle du terminal dans ladite image sphérique, selon un rapport entre ladite longueur « r » et un rayon (R) d'une sphère où ladite image sphérique se situe, et une coordonnée sphérique de la zone d'écran virtuelle du terminal.

7. Dispositif selon la revendication 5, **caractérisé en ce que** l'unité de sélection (4023) comprend :

une sous-unité de calcul configurée de manière à calculer une coordonnée orthogonale tridimensionnelle de chaque sommet de la zone cible dans ladite image sphérique selon une coordonnée sphérique de la zone cible dans ladite image sphérique ;
une sous-unité de détermination configurée de manière à déterminer une coordonnée orthogonale bidimensionnelle de chaque sommet de la zone cible dans ladite première image prédéfinie correspondant à la coordonnée orthogonale tridimensionnelle de chaque sommet de la zone cible dans ladite image sphérique, dans une relation de correspondance entre la coordonnée orthogonale bidimensionnelle et la coordonnée orthogonale tridimensionnelle de pixels dans ladite première image prédéfinie ; et
une sous-unité de sélection configurée de manière à déterminer la zone cible dans ladite première image prédéfinie selon la coordonnée orthogonale bidimensionnelle de chaque sommet de la zone cible dans ladite première image prédéfinie, et à sélectionner la zone cible dans ladite première image prédéfinie en tant que l'image de fond d'écran en cours du terminal.

8. Dispositif selon la revendication 5, **caractérisé en ce que** le module d'acquisition est configuré de manière à mettre en oeuvre périodiquement l'étape d'acquisition des informations de posture en cours du terminal dans un intervalle de temps prédéfini dès lors qu'un écran du terminal est allumé.

9. Terminal (500) comprenant :

un processeur (520) ;
une mémoire (504) destinée à stocker des instructions exécutables par le processeur (520) ;
dans lequel le processeur (520) est configuré de manière à exécuter les étapes d'un procédé d'affichage d'une image selon l'une quelconque des revendications 1 à 4.

10. Programme informatique incluant des instructions pour exécuter les étapes d'un procédé d'affichage d'une image selon l'une quelconque des revendications 1 à 4, lorsque ledit programme est exécuté par un ordinateur.

11. Support d'enregistrement lisible par un ordinateur, et sur lequel est enregistré un programme informatique incluant des instructions pour exécuter les étapes d'un procédé d'affichage d'une image selon l'une quelconque des revendications 1 à 4.

| 101 | Acquire a current posture information of a terminal |
| --- | --- |

| 102 | Select a target area in a preset picture as a current wallpaper picture of the terminal according to the posture information |
| --- | --- |

| 103 | Display the wallpaper picture in a screen display area of the terminal |
| --- | --- |

Fig. 1

| 201 | Acquire a current posture information of a terminal |
| --- | --- |

202

| 2021 | Determine a virtual screen area of the terminal in a corresponding 3-dimensional coordinate system of the terminal, according to the posture information and a radius of a sphere where a center point of the virtual screen area of the terminal locates |
| --- | --- |

| 2022 | Project the virtual screen area of the terminal to the preset picture which has subjected to a curl process from an origin of the corresponding 3-dimensional coordinate system of the terminal, and determine a target area projected by the virtual screen area of the terminal in the preset picture which has subjected to the curl process |
| --- | --- |

| 2023 | Determine a target area in the preset picture which has not subjected to the curl process according to the target area in the preset picture which has subjected to the curl process, and select the target area in the preset picture which has not subjected to the curl process as the current wallpaper picture of the terminal |
| --- | --- |

| 203 | Display the wallpaper picture in a screen display area of the terminal |
| --- | --- |

Fig. 2

Fig. 3

Fig. 4

Fig. 5

**EP 2 927 787 B1**

**Patent documents cited in the description**

- EP 2408181 A1